Europäisches Patentamt

European Patent Office

Office européen des brevets

(11) Veröffentlichungsnummer: **0 287 781 B1**

## (12) EUROPÄISCHE PATENTSCHRIFT

(45) Veröffentlichungstag der Patentschrift: **05.08.92**

(21) Anmeldenummer: **88102910.2**

(22) Anmeldetag: **26.02.88**

(51) Int. Cl.⁵: **A47J 31/06**, A47J 31/057

(54) **Gerät zum Bereiten heisser Getränke, wie Kaffee, Tee od.dgl.**

(30) Priorität: **24.04.87 DE 8705978 U**

(43) Veröffentlichungstag der Anmeldung:
**26.10.88 Patentblatt 88/43**

(45) Bekanntmachung des Hinweises auf die
Patenterteilung:
**05.08.92 Patentblatt 92/32**

(84) Benannte Vertragsstaaten:
**CH FR IT LI NL**

(56) Entgegenhaltungen:
DE-A- 3 402 425      US-A- 3 450 024
US-A- 3 511 166      US-A- 3 561 349
US-A- 3 975 996      US-A- 4 174 006
US-A- 4 467 707

(73) Patentinhaber: **Robert Krups GmbH & Co. KG
Heresbachstrasse 29
W-5650 Solingen 19(DE)**

(72) Erfinder: **Henn, Stefan
Wieden 29
W-5650 Solingen(DE)**
Erfinder: **Beumer, Klaus
Olgastrasse 49
W-5650 Solingen 11(DE)**

(74) Vertreter: **Buse, Karl Georg, Dipl.-Phys. et al
Patentanwälte Dipl.-Phys. Buse Dipl.-Phys.
Mentzel Dipl.-Ing. Ludewig Unterdörnen 114
W-5600 Wuppertal 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Gerät zum Bereiten heißer Getränke, wie Kaffee, Tee od.dgl., mit einem Gehäuse zur Unterbringung oder Lagerung eines Frischwasserbehälters, einer elektrischen Heizeinrichtung für das Wasser, einem Steigrohr zum Weiterleiten des erhitzten Wassers, einem Filter und einem unter dessen vorzugsweise mit einer Verschlußeinrichtung versehenen Auslaß angeordneten, auf einer Aufstellfläche abstellbaren Auffangbehälter, wobei zum Zubereiten einer kleinen, etwa eine oder zwei Tassen umfassenden Menge des Heißgetränkes, wie Kaffee, in den großvolumigen Filter ein Filtereinsatz einsetzbar ist, der eine Aufnahme für eine Kleinportionspackung von Kaffeemehl od.dgl. aufweist und dessen Boden wenigstens einen Auslaß aufweist.

Geräte zum Zubereiten heißer Getränke, wie Kaffee, Tee od.dgl. sind in zahlreichen Ausführungsformen bekannt. Neben kleineren Ausführungsformen, mit denen etwa zwei Tassen eines Heißgetränkes hergestellt werden können, gibt es auch größere Ausführungsformen, bei denen die Herstellung bis zu acht oder zwölf Tassen möglich ist. Diese bekannten Geräte, welche für Haushaltszwecke bestimmt sind, arbeiten so lange zufriedenstellend, als es um die Zubereiten von mindestens zwei Tassen Kaffee, Tee od.dgl. geht. Die Zubereitung von Heißgetränken in der Größenordnung von einer Tasse bereitet in den handelsüblichen Geräten dieser Art Schwierigkeiten, insbesondere was die Temperatur des hergestellten Heißgetränkes angeht. Das fertige Heißgetränk ist wegen bei der Zubereitung auftretender Wärmeverluste vielfach nur noch lauwarm, was von dem Benutzer als großer Nachteil angesehen wird. Dagegen arbeiten die bekannten Ausführungsformen für den Benutzer dann zufriedenstellend, wenn eine größere Anzahl von Tassen eines Heißgetränkes hergestellt werden soll.

Um hier Abhilfe zu schaffen, ist durch die US-A 3 455 024 (D1) ein Gerät zum Zubereiten heißer Getränke, wie Kaffee, Tee od.dgl., bekannt, bei dem zum Zubereiten einer kleinen, etwa eine oder zwei Tassen umfassenden Menge des Heißgetränkes, wie Kaffee, in einen großvolumigen Filter ein Filtereinsatz eingesetzt werden kann. Dieser hat eine Aufnahme für eine Kleinportionspackung von Kaffeemehl od.dgl. und sein Boden hat wenigstens einen Auslaß. Diese Ausführungsform eines Gerätes zum Bereiten heißer Getränke, wie Kaffee od.dgl., ist insoweit vorteilhaft, als wahlweise der großvolumige Filter oder der in dessen Aufnahme eingesetzte Filtereinsatz benutzt werden kann. Sofern mit diesem Gerät eine größere Menge eines Heißgetränkes hergestellt werden soll, wird somit der großvolumige Filter benutzt. Soll dagegen eine kleinere Menge eines Heißgetränkes erzeugt werden, so verwendet man den Filtereinsatz, der in den Aufnahmeraum des großvolumigen Filters eingesetzt werden kann und der eine Kleinportionspackung von Kaffeemehl od.dgl. aufnimmt. Auf der anderen Seite hat diese bekannte Ausführungsform eines Gerätes zum Zubereiten heißer Getränke den Nachteil, daß die Portionspackung unmittelbar unter der Auslaßöffnung des Steigrohres liegt. Das Kaffeemehl od.dgl. in der Kleinportionspackung wird daher sofort von dem herablaufenden und herabtropfenden heißen Wasser erfaßt. Es erfolgt ein schneller Durchlauf des Wassers durch das Kaffeemehl; eine wirksame Ausnutzung des Kaffeemehls ist dabei nicht zu erwarten.

Durch die Druckschrift DE-A 3 402 425 (D3) ist eine Filtervorrichtung zum Zubereiten von Tee mit einer Filterhalterung mit einer Hebevorrichtung bekanntgeworden, die durch ein vom Boden aufwärts gerichtetes Ausströmungsrohr und eine um dasselbe gestellte Hülse gebildet wird, deren Unterseite mit kapillaren Durchgängen versehen ist, wodurch ein kontinuierlich funktionierender Heber erhalten wird. Dabei sind bevorzugt die Durchgänge in Form von langen schmalen Schlitzen gebildet. Zum Wirksamwerden dieser bekannten Ausführungsform einer Filtervorrichtung müssen in den Begrenzungswandungen der vorhandenen Überlaufkappe kapillare Durchgänge vorhanden sein. Darüber hinaus ist bei dieser bekannten Filtervorrichtung, die zum Zubereiten von Tee dient, in der Aufnahme des Filtereinsatzes, die als Sammelraum für das fertige Getränk benutzt wird, nur ein einziger Saugheber vorgesehen.

Die vorliegende Erfindung will Geräte zum Zubereiten von Heißgetränken der in der US-A 3 450 024 (D1) angegebenen Art weiter verbessern, wobei jedoch die genannten Vorteile dieser Ausführungsform beibehalten bleiben sollen. Die Verbesserung dieses bekannten Gerätes soll darin bestehen, daß eine bessere Ausnutzung des Kaffees der in den Filter eingebrachten Kleinportionspackung erfolgt. Ferner soll dabei das an sich bekannte Prinzip des Saughebers zum Weiterleiten des Kaffees benutzt werden.

Zur Lösung dieser Aufgabe wird erfindungsgemäß vorgeschlagen, die Aufnahme des Filtereinsatzes als Sammelraum für den fertigen Kaffee zu benutzen und im Boden der Aufnahme mehrere, vorzugsweise zwei auf diametral gegenüberliegenden Seiten liegende Erweiterungen anzuordnen, die der Unterbringung je eines als Auslaß benutzbaren Saughebers dienen, deren Einlaßöffnungen innerhalb des Einsatzfilters unterschiedliche Höhe mit Bezug auf die Horizontale aufweisen.

Die Zuordnung eines Filtereinsatzes zu einem großvolumigen Filter einer an sich bekannten Kaffeemaschine hat nach wie vor den Vorteil, daß dann, wenn von dem Benutzer lediglich eine geringe Kaffeemenge hergestellt werden soll, der Filtereinsatz in den vorhandenen Großfilter eingesetzt wird und dann in den Aufnahmeraum des Filtereinsatzes eine im Handel erhältliche Kleinportionspackung eingelegt wird. Diese Kleinportionspackung liegt zwar nach wie vor unterhalb der Auslaßöffnung des Steigrohres und wird daher sofort von dem herablaufenden oder herabtropfenden heißen Wasser erfaßt, jedoch sammelt sich der fertige Kaffee - wie an sich bei der Herstellung von Tee bekannt - zunächst am Boden des Filtereinsatzes. Der sich dort ansammelnde Kaffee steigt mit der Zeit immer höher, bis er die Überlaufkante des Saughebers erreicht. Ist dieses geschehen, dann wird die im Filtereinsatz befindliche Kaffeemenge sofort in den großen Filter weitergeleitet und gelangt von dort aus durch dessen Auslaß in den Auffangbehälter, der auf der Aufstellfläche des Fußes der Kaffeemaschine ruht. Um dabei eine nicht zu hohe Fallhöhe des zuzubereitenden kaffees zu erreichen, ist zweckmäßig zunächst die Sperreinrichtung des großen Filters geschlossen Diese muß zum Entleeren erst geöffnet werden, was z.B. in einfacher Weise durch Betätigen der Sperreinrichtung ermöglicht werden kann. Danach kann die Kaffeemenge in das Auffangefäß ablaufen. Das Betätigen erfolgt dabei gegen die Einwirkung einer Feder, so daß nach Aufhören der äußeren Kraft die Sperreinrichtung in ihre wirksame Lage zurückkehrt.

Dadurch, daß im Boden der Aufnahme mehrere, vorzugsweise zwei auf diametral gegenüberliegenden Seiten liegende Erweiterungen angeordnet sind, die der Unterbringung je eines als Auslaß benutzbaren Saughebers dienen, kann der sich im Filtereinsatz ansammelnde Kaffee an mehreren Stellen abgeführt werden. Dabei weist der Boden des Filtereinsatzes außer den Durchbrüchen im Bereich der Saugheber keine weiteren Löcher od.dgl. auf.

Da das erfindungsgemäße Gerät zum Bereiten heißer Getränke wenigstens zwei Saugheber aufweist, deren Einlaßöffnungen innerhalb des Einsatzfilters unterschiedliche Höhe mit Bezug auf die Horizontale aufweisen, ergibt sich die vorteilhafte Möglich - keit, daß die beiden Saugheber zeitlich nacheinander wirksam werden.

Es empfiehlt sich, dem Boden jeder Erweiterung einen Rohrabschnitt anzuformen, derart, daß ein Unterteil in den Filter und ein Oberteil in den Filtereinsatz hineinragt, wobei auf den Oberteil unter Freilassung eines Ringspaltes eine Überlaufkappe aufgesteckt werden kann. Auf diese Weise läßt sich mit einfachsten Mitteln der Saugheber schaffen. Das Aufstecken der Überlaufkappe kann unter Einhaltung eines Klemmsitzes erfolgen, so daß die Überlaufkappe sicher in ihrer Lage gehalten wird.

Dabei empfiehlt es sich, den Aufsteckweg der Überlaufkappe auf dem Oberteil durch Erhebungen des Bodens der Erweiterung zu begrenzen. Dadurch ist die Endlage der Überlaufkappe auf dem zugeordneten Oberteil des Rohrabschnittes genau definiert.

Nach einem weiteren Vorschlag der Erfindung ist der Boden des Einsatzfilters geneigt zur Horizontalen angeordnet.

Es empfiehlt sich, den Boden der Aufnahme des Einsatzfilters mit Rippen zum Abstützen der Kleinportionspackung zu versehen. Auf diesen Rippen liegt dann die Kleinportionspackung lediglich bereichsweise auf. Dies ist für die Durchdringung des in der Portionspackung befindlichen Kaffeemehls od.dgl. von Vorteil.

Üblicherweise dient zum Auffangen des im Gerät hergestellten Getränkes ein Krug oder eine Thermoskanne. Bei den bekannten Ausführungsformen derartiger Auffangbehälter sind diese so gestaltet, daß sie beim Aufsetzen auf die Aufstellfläche des Standfußes des Gerätes die Verschlußeinrichtung des über ihnen angeordneten Filters in ihre Öffnungslage überführen. Eine solche Handhabung könnte auch bei Benutzung des erfindungsgemäßen Einsatzfilters durchgeführt werden. Jedoch hat diese Lösung den Nachteil, daß von der relativ kleinen Menge des Heißgetränkes eine große Kaffeekanne aufgewärmt werden müßte,. Dies hätte wiederum zur Folge, daß das zubereitete Getränk für den Benutzer eine zu niedrige Temperatur aufweist. Um hier Abhilfe zu schaffen, wird dem Benutzer die Möglichkeit eröffnet, auch eine Tasse, die keine bestimmte Gestalt und Ausbildung haben muß, zum Auffangen des zubereiteten Getränkes zu benutzen. Zu diesem Zweck hat die Verschlußeinrichtung des Filters einen zum Zusammenwirken mit dem oberen Rand einer Tasse dienenden Anschlag.

Dieser Anschlag ist vorzugsweise an einem verbreiterten Bereich der Verschlußeinrichtung vorgesehen und einer Steuerfläche nachgeschaltet. Bei dieser Ausführungsform des Gerätes bleibt die Verschlußeinrichtung so lange geschlossen, bis der Benutzer die Tasse in den Bereich des Anschlages führt und gegen den Widerstand einer Schließfeder die Verschlußeinrichtung anhebt und damit das Ventil öffnet. In dieser Öffnungsstellung kann dann das im Filter befindliche Getränk vollständig in die darunter befindliche Tasse abfließen.

Bei dieser Ausführungsform der Erfindung ist es somit zum Öffnen der Verschlußeinrichtung erforderlich, die Tasse als Steuermittel für die Verschlußeinrichtung zu benutzen.

Für den Fall, daß dem Benutzer eine solche Handhabung zu umständlich sein sollte, ist nach einem anderen Vorschlag der Erfindung vorgesehen, die Verschlußeinrichtung des Filters eine durch einen schlitzartigen Durchbruch der einen Filterwand greifende und mit der Hand zu betätigende Verlängerung aufweisen zu lassen. In diesem Fall kann die Tasse auf der Aufstellfläche des Gerätesfußes stehen bleiben. Der Benutzer braucht dann nur durch Betätigen der Verlängerung die Verschlußeinrichtung in ihre Öffnungslage zu überführen.

Um ein leichtes Anbringen und Entfernen des Filtereinsatzes in dem Filter des Gerätes zu ermöglichen, sind die Umfangsflächen des Filtereinsatzes geneigt angeordnet, wobei die Neigung derjenigen des Filters entspricht. Ferner sind dem Filtereinsatz Handgriffe angeformt, die dem Benutzer das Einsetzen und Herausnehmen des Filtereinsatzes aus dem Filter erleichtern.

Die in den Filtereinsatz einzusetzenden Kleinportionspackungen können eine handelsübliche Ausbildung haben. Sie können abgepackt und aromaversiegelt sein. Dabei ist es auch möglich, das Filtermaterial unterschiedliche Beschaffenheit aufweisen zu lassen. So können neben feinporigen auch grobporige Filter benutzt werden. Ferner ist es auch möglich, Spitztüten bekannter Gestaltung einzusetzen. Nur müssen diese hinsichtlich ihrer Abmessungen der Größe und Gestaltung der Aufnahme angepaßt sein.

Auf der Zeichnung ist die Erfindung in einem Ausführungsbeispiel dargestellt und zwar zeigen:

Fig. 1      im Längsschnitt, teilweise in Ansicht, ein Gerät zum Bereiten heißer Getränke, wie Kaffee, od.dgl. mit einem Filtereinsatz in dem Filter und mit einer Tasse als Auffanggefäß,

Fig. 2      im Längsschnitt und im vergrößerten Maßstab den zum Einsetzen in den Filter des Gerätes nach der Fig. 1 bestimmten Filtereinsatz bei abgenommenen Überlaufkappen,

Fig. 3      in Draufsicht den Filtereinsatz gemäß der Fig. 3 der Zeichnung,

Fig. 4      im Teilschnitt und im nochmals vergrößerten Maßstab einen Teilbereich des Filtereinsatzes mit einem seinem Boden zugeordneten Saugheber und aufgebrachter Überlaufkappe und

Fig. 5      im vergrößerten Maßstab eine Draufsicht auf einen der im Boden des Filtereinsatzes angeordneten Saugheber bei abgenommener Überlaufkappe.

Es sei zunächst erwähnt, daß in den Figuren der Zeichnungen nur diejenigen Teile eines Gerätes zum Bereiten heißer Getränke, wie Kaffee, Tee od.dgl. dargestellt sind, die für das Verständnis der Erfindung Bedeutung haben. So sind z.B. die Steuer- und Regeleinrichtungen und auch die elektrischen Zuführungsleitungen fortgelassen. Alle fehlenden Teile können einen an sich bekannten Aufbau haben und in ebenfalls an sich bekannter Weise wirksam werden.

Dem Ausführungsbeispiel ist eine generell mit 10 bezeichnete Kaffeemaschine zugeordnet. Diese hat eine in der einschlägigen Technik allgemein bekannte Ausbildung. Dies bedeutet, daß die Kaffeemaschine 10 ein hohles Gehäuse hat, dessen Inneres zur Unterbringung von Funktionsteilen der Kaffeemaschine dient bzw. dessen Wandungen zur Lagerung solcher Teile herangezogen werden. Im gewählten Ausführungsbeispiel hat das Gehäuse im Querschnitt gesehen etwa L-förmige Gestalt, wobei der Querschenkel des L's den Gehäusefuß 11 bildet. Den größeren Teil des L's nimmt ein Frischwasserbehälter 12 ein, der im gewählten Ausführungsbeispiel bereichsweise aus einem durchsichtigen Werkstoff gefertigt ist und auf seiner dem Beschauer zugekehrten Seite mit einer Markierung 13 versehen ist, die die Anzahl der Tassen angibt. Im gewählten Ausführungsbeispiel können maximal 10 Tassen Kaffee hergestellt werden. In dem Hohlraum des Gehäusefußes 11 ist eine an sich bekannte elektrische Heizeinrichtung 31 untergebracht. Diese ist in aller Regel als Durchlauferhitzer gestaltet und in bekannter Weise an eine elektrische Versorgungsleitung angeschlossen. In bekannter Weise gelangt das Wasser aus dem Frischwasserbehälter 12 in den Bereich der Heizeinrichtung 31 und wird nach dem Erhitzen über ein Steigrohr 14 nach oben befördert. Am Ende des Steigrohres 14 sitzt eine Verteilerkammer 15. Diese hat in ihrem Inneren eine Schnappscheibe, die abhängig von der Temperatur des sie benetzenden Wassers in zwei unterschiedliche Lagen überführt werden kann. So lange das Wasser noch kalt ist, befindet sich die Schnappscheibe der Verteilerkammer in einer solchen Lage, daß das im Steigrohr 14 aufsteigende Wasser zurück in den Frischwasserbehälter 12 geführt wird. Hat das Wasser, welches im Steigrohr 14 aufsteigt, dagegen die gewünschte Betriebstemperatur erreicht, so verändert die Schnappscheibe schlagartig ihre Lage und gibt damit den Weg frei für eine Verbindung der Verteilerkammer 15 mit einem Querrohr 16, das parallel und im Abstand zum Gehäusefuß 11 angeordnet ist und eine Austrittsöffnung 17 aufweist. Unterhalb der Austrittsöffnung 17 ist am Gehäuse der Kaffeemaschine 10 ein Filter 18 angeordnet, der normalerweise dazu dient, eine Filtertüte aufzunehmen, in welche dann das Kaffeemehl hineingegeben wird, das zum Zubereiten des Heißgetränkes erforderlich ist.

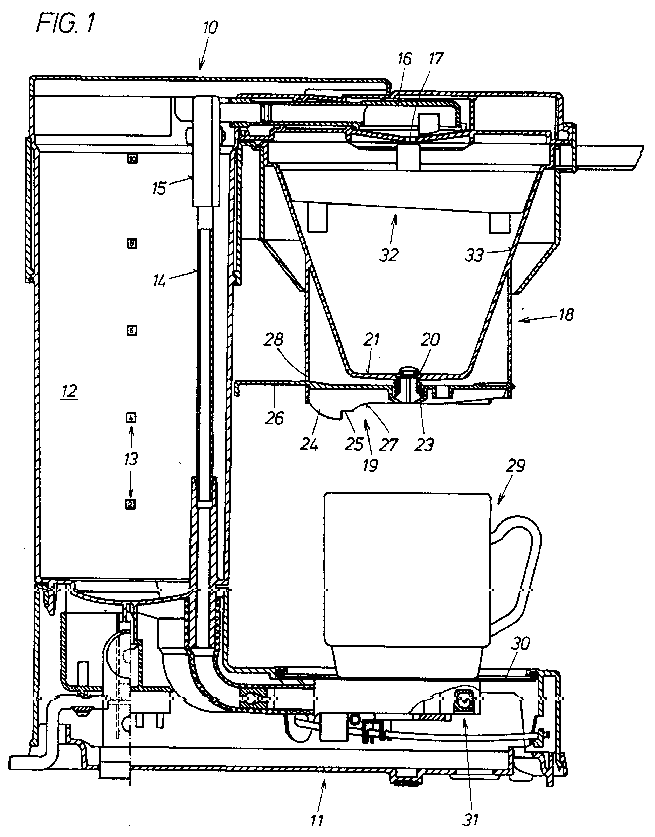

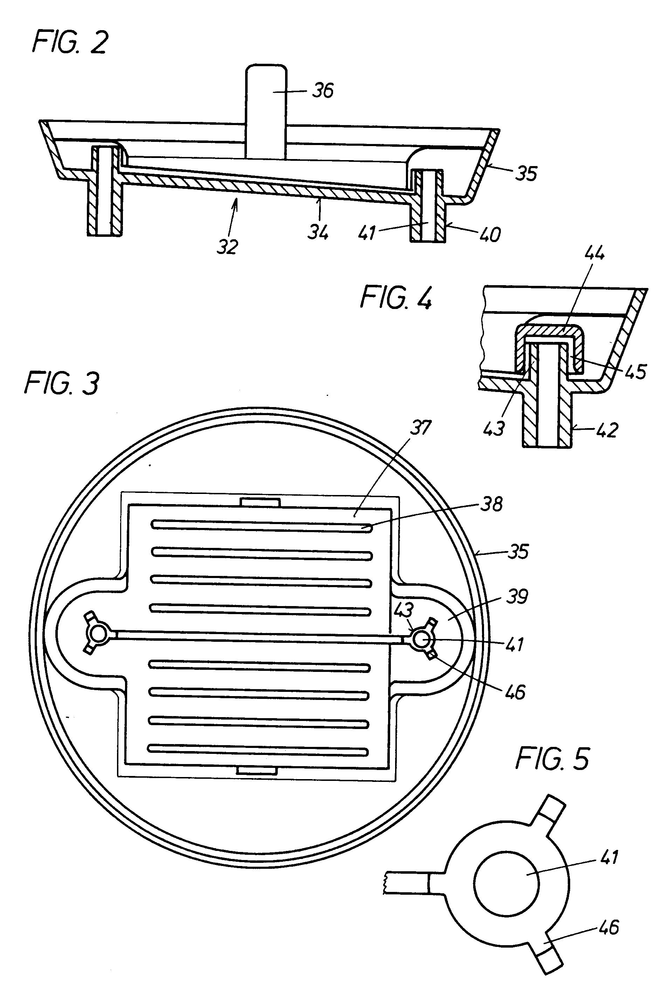

Im dargestellten Ausführungsbeispiel ist jedoch in dem oberen Bereich des Filters 18 ein generell mit 32 bezeichneter Filtereinsatz eingebracht worden, der dann benutzt wird, wenn mit der Kaffeemaschine 10 nur eine geringe Menge eines Heißgetränkes hergestellt werden soll, beispielsweise wenn der Benutzer lediglich eine oder zwei Tassen Kaffee zubereitet haben will. Der Filtereinsatz 32 ist in den Fig. 2 bis 5 der Zeichnungen dargestellt. Daraus ergibt sich, daß es sich um einen Hohlkörper handelt, der aus einem Kunststoff hergestellt ist und einen im wesentlichen geschlossenen Boden 34 aufweist, der nach außen weisende geneigte Umfangsflächen 35 besitzt. Die Neigung der Umfangsflächen 35 entspricht dabei der Neigung der Innenwand 33 des Filters 18. Die Abmessungen des Filtereinsatzes 32 sind dabei so gewählt, daß dieser - wie die Fig. 1 zeigt - im oberen Bereich des Filters 18 zu liegen kommt. Um dabei das Anbringen am oder Wiederentfernen des Filtereinsatzes 33 vom Filter zu erleichtern, ist der Filtereinsatz 32 mit angeformten Handgriffen 36 versehen, die laschenartig gestaltet sind. Auf der Innenseite des Bodens 34 befindet sich eine Aufnahme 37, die zur Unterbringung einer Kleinportionspackung von Kaffeemehl dient. Im gewählten Ausführungsbeispiel hat die Aufnahme 37 etwa quadratische Gestalt. Dabei ist vorausgesetzt, daß auch die Kleinportionspackung in Draufsicht gesehen etwa die Form eines quadratischen Körpers aufweist. Hier ist jedoch bei Bedarf ohne weiteres eine Anpassung möglich. Dies bedeutet, daß auch Aufnahmen 37 im Filtereinsatz 32 vorgesehen sein können, die im Querschnitt gesehen anders, z.B. kreisförmig gestaltet sind. Weitere Ausbildungsformen sind ohne weiteres möglich. Der Boden der Aufnahme 37 ist mit Rippen 38 versehen, die im gewählten Ausführungsbeispiel in regelmäßiger Anordnung vorgesehen sind und sich fast über die gesamte Breite des Aufnahmebodens erstrecken.

Auf zwei diametral gegenüberliegenden Seiten hat die Aufnahme 37 je eine Erweiterung 39 von halbkreisförmiger Gestalt. Etwa in der Mitte jeder Erweiterung 39 liegend ist ein generell mit 40 bezeichneter Rohrabschnitt vorgesehen, der den einen Teil eines Saughebers bildet. Dieser Rohrabschnitt 40 wird dabei in seiner Längsrichtung von einer Bohrung 41 durchsetzt.

Der Rohrabschnitt 40, der dem Boden 34 des Filtereinsatzes 32 unmittelbar angeformt ist, besteht aus dem Unterteil 42, welches in den Filter 18 hineinragt und aus dem Oberteil 43, welches in den Freiraum des Filtereinsatzes 32 hineinragt. Auf den Oberteil 43 wird in der in Fig. 1 dargestellten Weise eine Überlaufkappe 44 aufgesteckt und zwar derart, daß einmal ein Ringraum 45 verbleibt und zum anderen, daß der Aufsteckweg der Überlaufkappe 44 begrenzt ist. Dies wird dadurch erreicht, daß die Stirnfläche der Überlaufkappe 44 auf Erhebungen 46 des Bodens 34 auftrifft.

Wie die Fig. 2 der Zeichnung am besten erkennen läßt, ist der Boden 34 des Filtereinsatzes 32 geneigt zur Horizontalen ausgebildet. Aus der gleichen Zeichnungsfigur ist zu ersehen, daß die oberen Eintrittsöffnungen der beiden Saugheber in unterschiedlicher Höhe zu liegen kommen. Daher werden die beiden Saugheber auch zeitlich unterschiedlich wirksam werden. Das aus der Austrittsöffnung 17 des Querrohres 16 austretende heiße Wasser gelangt zunächst zu der in der Aufnahme 37 des Filtereinsatzes liegenden, in der Zeichnung nicht dargestellten Kleinportionspackung, durchnetzt das Kaffeemehl derselben und gelangt dann in den Bereich des Bodens 34. Dort sammelt es sich an. Es kann mit der Zeit hochsteigen und zwar auch in dem Ringspalt 45. In der Endphase wird dann die obere Öffnung der Bohrung 41 erreicht. Ist dies geschehen, dann wird der Saugheber wirksam und es erfolgt in an sich bekannter Weise ein Abführen des im Filtereinsatz 32 befindlichen Heißgetränkes. Dieses gelangt dann zunächst in den Hohlraum des Filters 18. Es wird dort an einem unmittelbaren Abfließen durch die Verschlußeinrichtung 19 gehindert. Diese Verschlußeinrichtung 19 hat einen einseitig gelagerten schwenkbaren Hebel, der etwa in seiner Mitte einen Ventilkörper aufweist, der federbelastet ist. In der in der Fig. 1 dargestellten Lage der Verschlußeinrichtung 19 befindet sich der Verschlußkörper in seiner Schließlage, d.h. der im Boden 21 des Filters 18 in der Mitte angeordnete Auslaß 20 ist abgesperrt. Die Feder 23 drückt nämlich den eigentlichen Verschlußkörper gegen die Begrenzungswandungen des Auslasses 20.

Die Verschlußeinrichtung 19 hat einen verbreiterten Bereich 24 mit einem Anschlag 25, der durch zwei senkrecht zueinander stehende Wandungen begrenzt ist. Diesem Anschlag 25 ist eine Steuerfläche 27 vorgeschaltet.

Normalerweise wird zum Auffangen des fertigen Heißgetränkes ein Krug, wie ein Glaskrug, benutzt, der in seiner Höhe so bemessen ist, daß er unmittelbar unter der Verschlußeinrichtung 19 steht. Beim Anbringen eines solchen Glaskruges wirkt der obere Rand mit der Steuerfläche 27 der Verschlußeinrichtung 19 zusammen und schwenkt diese entgegen der Einwirkung der Feder 23 nach oben und gibt damit den Auslaß 20 frei. Dies geschieht somit erst dann, wenn sich der Auffangkrug bereits unter dem Auslaß befindet.

Da im vorliegenden Falle vorgesehen ist, nur eine geringe Anzahl von Tassen eines Heißgetränkes herzustellen, wird anstelle eines Auffangkruges oder eine Auffangkanne eine Tasse 29 benutzt, die auf der Aufstellfläche 30 des Gehäusefußes 11 steht. Wie aus der Zeichnung ersichtlich, sind die Höhenabmessungen der Tasse 29 derart, daß der obere Rand nicht unmittelbar mit der Steuerfläche 27 der Verschlußeinrichtung in Verbindung kommen kann. Um nun auch bei Verwendung einer solchen Tasse ein Öffnen der Verschlußeinrichtung 19 zu bewerkstelligen, ist der Anschlag 25 vorgesehen. Der Benutzer hebt zum Betätigen der Verschlußeinrichtung 19 die Tasse 29 so weit an, bis der obere Rand derselben mit dem Anschlag 25 zusammenwirkt. Dabei ist es von Vorteil, daß die Begrenzungswandungen des Anschlages senkrecht zueinander stehen, so daß eine definierte Einwirkungs-und Berührungsfläche vorgesehen ist. Durch weiteres Anheben der Tasse 29 entgegen der Einwirkung der Feder 23 erfolgt dann das Anheben der Verschlußeinrichtung 19 und damit das Öffnen des Auslasses 20. Dadurch kann der Kaffee, der sich vorher in dem unteren Teil des Filters 18 gesammelt hat, in einem Zug in den Innenraum der Tasse 29 gelangen. Sobald die Tasse 29 dann aus dem Bereich des Anschlages 25 herauskommt und - wie in der Fig. 1 dargestellt - wieder auf die Aufstellfläche 30 zurückgebracht wird, kann die Feder 23 wirksam werden und dann den Auslaß 20 des Filters 18 schließen.

Daneben ist aber auch eine andere Arbeitsweise zum Öffnen der Verschlußeinrichtung 19 möglich. In diesem Fall kann die Tasse 29, so wie in der Fig. 1 dargestellt, auf der Aufstellfläche 30 verbleiben. Der Benutzer der Kaffeemaschine 10 kann nämlich eine Verlängerung 26 des hebelartigen Verschlusses 19 erfassen und nach oben entgegen der Einwirkung der Feder 23 bewegen. Dadurch wird der Auslaß 20 freigegeben. Die Verlängerung 26 durchgreift dabei einen Längsschlitz 28 der einen Wand des Filters 18. Die Länge des Schlitzes bestimmt dabei den Verschwenkweg der Verlängerung 26. Durch Loslassen der Verlängerung 26 kann auch in diesem Fall die Feder 23 wieder wirksam und der Verschlußkörper der Verschlußeinrichtung in seine unwirksame Lage überführt werden.

Wie bereits erwähnt, ist die dargestellte Ausführung nur eine beispielsweise Verwirklichung der Erfindung. Diese ist nicht darauf beschränkt. Vielmehr sind noch mancherlei andere Ausführungen und Anwendungen möglich. Dies gilt insbesondere für die Ausbildung und Gestalt des Filtereinsatzes 32. Dieser kann insbesondere in Anpassung an die Ausbildung des vorhandenen Filters 18 eine andere Gestaltung aufweisen und auch in anderer als der in der Fig. 1 wiedergegebenen Weise mit den Filterwandungen 33 des Filters 18 in Verbindung treten.

So ist es beispielsweise möglich, den oberen Rand des Filtereinsatzes 32 mit Haken od.dgl. zu versehen, so daß ein Übergreifen des oberen Randes eines Filters 18 durch die Haken möglich ist. Eine solche Ausführungsform kann beispielsweise dann benutzt werden, wenn der obere Rand des Filters 18 bei einer Kaffeemaschine frei zugänglich ist. Ferner ist es auch möglich, die Anzahl der dem Boden 34 des Filtereinsatzes 32 zugeordneten Saugheber zu variieren. Beispielsweise können bei Bedarf auch mehr als zwei Saugheber vorhanden sein. Dabei ergibt sich ferner die Möglichkeit, bei Vorhandensein mehrerer Saugheber diese unterschiedlich zu gestalten, insbesondere was die Querschnittsgröße ihrer durchluafenden Bohrung angeht.

Ferner ist es möglich, die Aufnahme 37 für die Kleinportionspackung abweichend vom Ausführungsbeispiel zu gestalten. Dabei kann eine Anpassung an vorhandene Formen der Kleinportionspackungen vorgenommen werden. Es lassen sich dabei auch die Rippen 38 des Bodens der Aufnahme 37 abweichend vom Ausführungsbeispiel gestalten. So können anstelle der vorhandenen Rippen 38 auch noppenartige Erhebungen vorgesehen sein. Und schließlich ist es möglich, die Erfindung bei anderen an sich bekannten Kaffeemaschinen zu verwenden. Neben handelsüblichen Kleinportionspackungen, die in aller regel das Kaffeemehl aromaversiegelt enthalten, lassen sich auch Spitzfiltertüten einsetzen, die dann ihrerseits das Kaffeemehl aufnehmen.

In der Ausführungsform der Erfindung gemäß der Zeichnung ist vorgesehen, den Boden des Filtereinsatzes einen als Saugheber ausgebildeten Auslaß aufweisen zu lassen. Daneben besteht aber die Möglichkeit, das Abfließen des Heißgetränkes aus dem Filtereinsatz dadurch zu bewerkstelligen daß der Boden Löcher oder Durchbrüche aufweist, die in unterschiedlicher Größe und Anordnung vorhanden sein können. Zusatzlich ergibt sich dabei die weitere Möglichkeit, wenigstens einem Teil dieser Löcher oder Durchbrüche an sich bekannte Einrichtungen zuzuordnen, mit denen sich eine Steuerung der wirksamen Querschnittsfläche durchführen läßt. Der Benutzer hat es dabei in der Hand, durch Betätigen dieser Einrichtungen den Ablauf des Heißgetränkes aus dem Filtereinsatz zu verzögern oder zu beschleunigen. Allgemein gesprochen ist dadurch eine Regelung der pro Zeiteinheit aus dem Filtereinsatz abfließenden Heißgetränkemenge möglich.

Bezugszeichenliste :

10 - Kaffeemaschine
11 - Gehäusefuß
12 - Frischwasserbehälter
13 - Markierung (an 12)
14 - Steigrohr
15 - Verteilerkammer
16 - Querrohr
17 - Austrittsöffnung
18 - Filter
19 - Verschlußeinrichtung
20 - Auslaß (in 18)
21 - Boden (von 18)
22 - Verschlußkörper

23 -      Feder
24 -      verbreiterter Bereich (von 19)
25 -      Anschlag
26 -      Verlängerung
27 -      Steuerfläche (an 19)
28 -      Durchbruch (für 26)
29 -      Tasse (Auffangbehälter)
30 -      Aufstellfläche (für 29)
31 -      elektrische Heizeinrichtung
32 -      Filtereinsatz
33 -      Innenwandung (von 18)
34 -      Boden (von 32)
35 -      Umfangsfläche (von 32)
36 -      Handgriff
37 -      Aufnahme
38 -      Rippen
39 -      Erweiterung (von 37)
40 -      Rohrabschnitt
41 -      Bohrung (von 40)
42 -      Unterteil (von 40)
43 -      Oberteil (von 40)
44 -      Überlaufkappe
45 -      Ringspalt
46 -      Erhebung

**Patentansprüche**

1. Gerät zum Bereiten heißer Getränke, wie Kaffee, Tee od.dgl., mit einem Gehäuse zur Unterbringung oder Lagerung eines Frischwasserbehälters (12) , einer elektrischen Heizeinrichtung (31) für das Wasser, einem Steigrohr (14) zum Weiterleiten des erhitzten Wassers, einem Filter (18) und einem unter dessen vorzugsweise mit einer Verschlußeinrichtung versehenen Auslaß angeordneten, auf einer Aufstellfläche (30) abstellbaren Auffangbehälter (29; wobei zum Zubereiten einer kleinen, etwa eine oder zwei Tassen umfassenden Menge des Heißgetränkes, wie Kaffee, in den großvolumigen Filter (18) ein Filtereinsatz (32) einsetzbar ist, der eine Aufnahme (37) für eine Kleinportionspakkung von Kaffeemehl od.dgl. aufweist und dessen Boden (34) wenigstens einen Auslaß aufweist,
**dadurch gekennzeichnet,**
daß die Aufnahme (37) des Filtereinsatzes (32) als Sammelraum für den fertigen Kaffee od.dgl. benutzbar ist, und daß im Boden (34) der Aufnahme (37) mehrere, vorzugsweise zwei auf diametral gegenüberliegenden Seiten liegende Erweiterungen (39) angeordnet sind, die der Unterbringung je eines als Auslaß benutzbaren Saughebers dienen, deren Einlaßöffnungen innerhalb des Einsatzfilters (32) unterschiedliche Höhe mit Bezug auf die Horizontale aufweisen.

2. Gerät nach Anspruch 1, dadurch gekennzeichnet, daß dem Boden der Erweiterung (39) ein Rohrabschnitt (40) angeformt ist, derart, daß ein Unterteil /42) in den Filter (18) und ein Oberteil (43) in den Filtereinsatz (32) hineinragt, und daß auf den Oberteil (43) unter Freilassung eines Ringspaltes (45) eine Überlaufkappe (44) aufsteckbar ist.

3. Gerät nach Anspruch 2, dadurch gekennzeichnet, daß der Aufsteckweg der Überlaufkappe (44) auf den Oberteil (43) durch Erhebungen (46) des Bodens der Erweiterung (49) begrenzt ist.

4. Gerät nach einem oder mehreren der vorangehenden Ansprüche, dadurch gekennzeichnet, daß der Boden (34) des Einsatzfilters (32) geneigt zur Horizontalen angeordnet ist.

5. Gerät nach einem oder mehreren der vorangehenden Ansprüche, dadurch gekennzeichnet, daß der Boden der Aufnahme (37) des Filtereinsatzes (32) mit Rippen (38) zum Abstützen der Kleinpartionspackung versehen ist.

6. Gerät nach Anspruch 1, dadurch gekennzeichnet, daß die Verschlußeinrichtung (19) des Filters (18) einen zum Zusammenwirken mit dem oberen Rand einer Tasse (29) dienenden Anschlag (25) aufweist.

7. Gerät nach Anspruch 6, dadurch gekennzeichnet, daß der Anschlag (25) an einem verbreiterten Bereich (24) der Verschlußeinrichtung (19) vorgesehen und einer Steuerfläche (27) nachgeschaltet ist.

8. Gerät nach Anspruch 1 oder 6, dadurch gekennzeichnet, daß die Verschlußeinrichtung (19) des Filters (18) eine durch einen schlitzartigen Durchbruch (28) der einen Filterwand greifende und mit der Hand zu betätigende Verlängerung (26) aufweist.

9. Gerät nach Anspruch 1, dadurch gekennzeichnet, daß im Boden (34) der Aufnahme (37) des Filtereinsatzes (32) gebildete Löcher wenigstens teilweise Einrichtungen zur Steuerung ihrer wirksamen Querschnittsfläche und damit zur Variation der durch sie ablaufenden Kaffeemenge aufweisen.

10. Gerät nach Anspruch 1, gekennzeichnet durch die Verwendung von Kleinportionspackungen mit unterschiedlich beschaffenem Filtermaterial.

## Claims

1. Machine for the preparation of hot drinks, such as coffee, tea or the like, with a housing for the accommodation or mounting of a fresh water container (12), an electrical heating device (31) for the water, a rising tube (14) for the onward transmission of the heated water, a filter (18) and installed under the filter outlet, which will preferably be furnished with a locking feature, a device capable of being deposited on a flat surface (30), namely a receptacle (29); whereby for the preparation of a small quantity such as one or two cups of the hot drink, such as coffee, a filter insert (32) can be inserted into the large-area filter (18), featuring a compartment (37) for an individual portion pack of ground coffee or the like and having at least one outlet in its base (34),
   **wherein**
   the compartment (37) of the filter insert (32) can be used as the collection area for the prepared coffee or the like, with the base (34) of the compartment (37) being provided with more than one, preferably two extensions on diametrically opposed sides, each serving to accommodate a pipette usable as an outlet, in which case the inlet openings within the insert filter (32) are of a differing height with reference to the horizontal.

2. Machine as in Claim 1, wherein the base of the extension (39) is furnished with a tube section (40), in such a manner, that a lower part (42) extends into the filter (18) and an upper part (43) into the filter insert (32), and that an overflow cap (44) is attachable to the upper part (43) leaving an annular gap (45).

3. Machine as in Claim 2, wherein the mounting of the overflow cap (44) on the upper part (43) is limited by projections (46) in the base of the extension (49).

4. Machine as in one or more of the preceding claims, wherein the base (34) of the insert filter (32) is set at an angle to the horizontal.

5. Machine as in one or more of the preceding claims, wherein the base of the compartment (37) of the filter insert (32) is furnished with ribs (38) to support the individual portion pack.

6. Machine as in Claim 1, wherein the locking feature (19) of the filter (18) displays a stop (25) to engage with the upper edge of a cup (29).

7. Machine as in Claim 6, wherein the stop (25) is located behind an extended area (24) of the locking feature (19) and a guide surface (27).

8. Machine as in Claim 1 or 6, wherein the locking feature (19) of the filter (18) has an elongation (26) projecting through a slit-shaped aperture (28) of one filter wall and capable of being operated by hand.

9. Machine as in Claim 1, wherein the holes formed in the base (34) of the compartment (37) of the filter insert (32) are at least partially provided with devices to control their effective average area and thus vary the quantity of coffee passing through them.

10. Machine as in Claim 1, featuring the use of individual portion packs with filter material of differing nature.

## Revendications

1. Appareil pour la préparation de boissons chaudes, telles que café, thé ou similaires, comprenant un boîtier de réception ou de logement d'un réservoir à eau fraîche (12), un dispositif électrique (31) de chauffage de l'eau, un tuyau ascendant (14) pour transporter l'eau chauffée, un filtre (18) et une sortie disposée sous celui-ci et de préférence munie d'un dispositif de fermeture, un réservoir collecteur (29) pouvant être placé sur une surface de présentation (30); une garniture de filtre (32) étant susceptible d'être disposée dans le filtre (18) de grande taille, pour la préparation d'une petite quantité, d'environ une ou deux tasses de la boisson chaude telle que le café, ladite garniture de filtre présentant un récepteur (37) pour un paquet d'une petite portion de café en poudre ou similaire et dont le fond (34) comporte au moins une sortie,
   caractérisé en ce que
   le récepteur (37) de la garniture de filtre (32) est utilisable pour recueillir le café prêt ou similaire, et en ce que dans le fond (34) du récepteur (37) sont disposés plusieurs, de préférence deux, élargissements (39) situés sur des côtés diamétralement opposés, qui servent chacun au logement d'un siphon utilisable comme sortie et dont les ouvertures d'admission dans la garniture de filtre (32) sont disposées à une hauteur différente par rapport à l'horizontale.

2. Appareil selon la revendication 1, caractérisé en ce qu'au fond de l'élargissement (39), est formé un tronçon de tube (40) de telle sorte qu'une partie inférieure (42) pénètre dans le filtre (18) et qu'une partie supérieure (43) pénètre dans la garniture de filtre (32) et en ce qu'un capuchon de recouvrement (44) est susceptible d'être rabattu sur la partie supérieure (43) en ménageant un espace libre constitué d'un passage annulaire (45).

3. Appareil selon la revendication 2, caractérisé en ce que la zone de recouvrement du capuchon (44) sur la partie supérieure (43) est délimitée par des parties en saillie (46) du fond de l'élargissement (39).

4. Appareil selon l'une ou plusieurs des revendications précédentes, caractérisé en ce que le fond (34) de la garniture de filtre (32) est incliné par rapport à l'horizontale.

5. Appareil selon l'une ou plusieurs des revendications précédentes, caractérisé en ce que le fond du récepteur (37) de la garniture de filtre (32) est muni de nervures (38) pour l'appui du paquet de petite portion.

6. Appareil selon la revendication 1, caractérisé en ce que le dispositif de fermeture (19) du filtre (18) présente une butée (25) servant à coopérer avec le bord supérieur d'une tasse (29).

7. Appareil selon la revendication 6, caractérisé en ce que la butée (25) est prévue dans une partie élargie (24) du dispositif de fermeture (19) et est reliée à une surface de commande (27).

8. Appareil selon la revendication 1 ou 6, caractérisé en ce que le dispositif de fermeture (19) du filtre (18) comporte un prolongement (26) à actionner à la main et entrant en contact avec une paroi du filtre par l'intermédiaire d'une découpe en forme de fente.

9. Appareil selon la revendication 1, caractérisé en ce que des trous ménagés dans le fond (34) du récepteur (37) de la garniture de filtre (32) comportent au moins en partie des dispositifs de réglage de la surface effective de leur section et donc de variation des quantités de café qui les traversent.

10. Appareil selon la revendication 1, caractérisé par l'utilisation de paquets de petite portion avec des matériaux filtrants de diverses provenances.

FIG. 1

FIG. 2

FIG. 4

FIG. 3

FIG. 5